# EUROPÄISCHE PATENTSCHRIFT

(11) **EP 2 269 886 B1**
(45) Veröffentlichungstag und Bekanntmachung des Hinweises auf die Patenterteilung: **18.01.2012**
(21) Anmeldenummer: 10006290.0
(22) Anmeldetag: 17.06.2010
(51) Int. Cl.: B61D 45/00, B60P 7/08

(54) **Zurrpunkt für Spann-und/oder Zugmittel**
Lashing point for clamping and traction devices
Point d'amarrage pour moyen de serrage et/ou de traction

(30) Priorität: 29.06.2009 DE 202009008982 U
(43) Veröffentlichungstag der Anmeldung: 05.01.2011
(73) Patentinhaber: Thiele GmbH & Co. KG, 58618 Iserlohn (DE)
(72) Erfinder: Norpoth, Bernhard, 45309 Essen (DE)
(74) Vertreter: Griepenstroh, Jörg

(56) Entgegenhaltungen:
- EP-A1- 0 779 179
- DE-A1- 3 301 960
- DE-A1- 3 410 445
- DE-U1- 8 618 070
- FR-A1- 2 756 236

## Beschreibung

Die Erfindung betrifft einen Zurrpunkt zum Anschlagen von Spann- und/oder Zugmitteln mit den Merkmalen im Oberbegriff des Patentanspruchs 1.

Ein derartiger Zurrpunkt zählt beispielsweise durch die DE 297 18 318 U1 zum Stand der Technik. Zurrpunkte kommen beispielsweise zum Sichern von Transportgütern auf Schiffen und Lastkraftwagen zum Einsatz. Hierin wird ein Zurrpunkt zum Anschlagen von Spann- oder Zugmitteln beschrieben, welcher aus einem Bügel und einem Lagerbock besteht. Der Steg des Bügels greift dabei in eine Aussparung des Lagerbocks ein. Im montierten Zustand drückt ein in einer mittig der Nut angeordneten Tasche angeordnetes Druckmittel von oben auf den Steg des Bügels, so dass dieser in jeder Stellung des Bügels seine momentane Lage beibehält, wodurch die Handhabung erleichtert wird. Ein unkontrolliertes Pendeln und Klappern des unbelasteten Bügels während der Fahrt wird vermieden. Auf Grund der Anordnung des Druckmittels muss der Lagerbock oberhalb des Stegs in seiner Dicke entsprechend dimensioniert werden, so dass auch bei maximaler Belastung Kräfte gleichmäßig vom Steg auf den Lagerbock übertragen werden.

Aus der FR 2 756 236 A1 ist ein Zurrpunkt mit einem in einem Lagerbock schwenkbar gelagerten Bügel bekannt, wobei der Bügel Schenkel besitzt, die über einen Steg miteinander verbunden sind. Der Steg greift in eine U-förmige Nut des Lagerbocks ein. Wenigstens ein Federelement ist in der innerhalb des Lagerbocks angeordnet. Das Federelement befindet sich gewissermaßen mündungsseitig der U-förmigen Nut, so dass sich in der Mitte der Nut über die gesamte Länge der Nut und einen Winkel von wenigstens 60° der Innenfläche der Nut eine geschlossene Anlagefläche für den Steg erstreckt.

Ausgehend von diesem Stand der Technik liegt der Erfindung die Aufgabe zu Grunde, einen Zurrpunkt zum Anschlagen von Spann- und/oder Zugmitteln zu schaffen, der eine erleichterte Handhabung des Zurrpunktes erlaubt, ein Klappern des Zurrpunktes verhindert und einen möglichst großen Freiraum zwischen der vom Bügel eingeschlossenen Fläche und dem Lagerbock aufweist.

Die Lösung dieser Aufgabe besteht nach der Erfindung in einem Zurrpunkt mit den Merkmalen des Anspruchs 1.

Vorteilhafte Ausgestaltungen der Erfindung sind Gegenstand der Unteransprüche 2 bis 16.

Der Zurrpunkt weist einen in einem Lagerbock schwenkbar gelagerten Bügel auf. Der Bügel ist D-förmig ausgestaltet und weist parallele Schenkel auf, welche über einen Steg miteinander verbunden sind. Dieser Steg bildet gleichzeitig die Schwenkachse des Bügels, um welche der Bügel in montierter Position um etwa 180° verschwenkbar ist. Dabei ist der Steg in einer U-förmigen Nut des Lagerbocks angeordnet. Eine Innenfläche der Nut wird durch zwei parallele Seitenflächen und einen durchgängigen Nutgrund gebildet. Neben der U-förmigen Nut weist der Lagerbock wenigstens eine Tasche auf, welche in eine der Innenseiten der Nut mündet. In dieser Tasche ist ein Federelement angeordnet. Dieses Federelement drückt mit einem Ende in radialer Richtung gegen die Umfangsseite des Stegs. Mit dem anderen Ende stützt sich das Federelement an einer Endseite der Tasche ab.

Die Innenfläche der Nut weist einen geschlossenen Bereich auf, welcher als Anlagefläche für den Steg ausgebildet ist. Diese Anlagefläche erstreckt sich über die gesamte Länge des Lagerbocks im Bereich des Stegs und über einen Winkel von wenigstens 60°. Vorzugsweise erstreckt sich diese Anlagefläche hierbei über einen Winkel von mehr als 100°. Wird der Bügel beim Gebrauch innerhalb dieses Bereichs auf Zug belastet, so wird durch ein gleichmäßiges Anpressen der Umfangsseite an die Anlagefläche eine gleichmäßige Kraftverteilung erzielt. Dadurch kann eine Dicke des Lagerbocks oberhalb der Nut und somit die gesamte Höhe des Lagerbocks optimiert werden. Dies hat den Vorteil, dass die Aussparungen oder Vertiefungen auf Transport- oder Ladeflächen, in die die Lagerböcke oftmals zum Schutz eingelassen sind, flacher ausgestaltet werden können. Zudem steht ein oberhalb des Stegs flach ausgeführter Lagerbock weniger gegenüber einer Befestigungsfläche hervor und ist somit besser vor Beschädigungen geschützt.

Das in der Tasche angeordnete Federelement ist vorzugsweise als Druckfeder ausgestaltet. Im montierten Zustand drückt die Druckfeder mit einem Ende gegen die Umfangsseite des Stegs und stützt sich dabei mit dem anderen Ende an einer Endseite der Tasche ab. Dadurch wird der Steg zusammen mit dem Bügel in seiner Position gehalten. So wird beispielsweise der Bügel in stehender Position, also senkrecht zur Auflagefläche, gehalten und das Einhängen eines Hakens erleichtert. Darüber hinaus ist der Bügel auch in liegender Position, also parallel zur Auflagefläche, gesichert, wodurch ein loses Klappern und Verschwenken während der Fahrt eines Transporters verhindert wird. Um beim Verschwenken des Stegs die Reibung zwischen dem Ende der Druckfeder und seiner Umfangsseite zu minimieren, kann es vorteilhaft sein, das Ende der Druckfeder mit einer Art Kappe zu versehen.

Vorteilhafterweise sind zwei in die Nut mündende Taschen vorgesehen. Diese können parallel zur Auflagefläche ausgerichtet sein. Dabei können die Taschen U-förmige Vertiefungen in den Auflageflächen sein. Vorzugsweise sind die Taschen einander gegenüberliegend angeordnet. Die Anordnung der Taschen zueinander kann aber beispielsweise auch nur auf einer Innenseite der Nut erfolgen oder auf beiden gegenüberliegenden Innenseiten und zueinander versetzt.

Die Nut des Lagerbocks weist eine Breite und eine Tiefe auf, welche wenigstens dem Durchmesser des Stegs entspricht. Dabei sollte zwischen dem Steg und der Nut nach Anschweißen des Lagerbocks beispielsweise auf einer Ladefläche eine Spielpassung bestehen.

Um die Position der Federelemente in den Taschen sowie die des Stegs in der Nut des Lagerbocks auch im unmontierten Zustand zusätzlich zu sichern, kann eine Art Halteelement vorgesehen sein, welches mindestens einen Teil der Nut und einen Teil der Taschen bedeckt.

Für eine sichere Fixierung kann das Halteelement auf seiner zum Lagerbock weisenden Seite Blattfederelemente aufweisen, mit denen es in die Taschen und/oder in die Nut eingreift. Die Blattfederelemente ermöglichen ein Einklipsen des Halteelements in die Nut und/oder die Taschen. Dabei können die Blattfederelemente auch direkt aus dem Halteelement geformt sein. Darüber hinaus besteht die Möglichkeit, das Halteelement mit dem Lagerbock zu verschweißen. Die dafür notwendigen Schweißpunkte werden so angeordnet, dass sie die Wurzelnaht der Schweißverbindung zwischen Lagerbock und Befestigungsfläche nicht negativ beeinflussen.

Die Befestigung des Zurrpunktes erfolgt durch eine Schweißverbindung zwischen Lagerbock und Befestigungsfläche.

Hierzu weist das Halteelement an seinen längsseitigen Enden Stege auf, deren Kanten senkrecht von der Unterseite des Lagerbocks weg weisend abgewinkelt sind. Stirnseiten der abgewinkelten Kanten dienen als Auflagefläche für den Lagerbock. Der dadurch erzielte Abstand vereinfacht das Legen der Wurzelnaht zwischen der Unterseite des Lagerbocks und beispielsweise einer Transportfläche. Die Wurzelnaht dient als Grundlage für eine Kehlnaht, welche zwischen den gegenüber der Unterseite des Lagerbocks abgewinkelten Verbindungsflächen und der Befestigungsfläche erzeugt wird.

Die Ausgestaltung des Zurrpunktes kann natürlich nach entsprechender Dimensionierung auch auf die Ausgestaltung von Transportringen zum Heben von Lasten übertragen werden.

Die Erfindung ist nachfolgend anhand eines in den Figuren dargestellten Ausführungsbeispiels näher erläutert. Es zeigen:

### Figuren

- 1 a und 1 b einen: erfindungsgemäßen Zurrpunkt in Frontalansicht und im Querschnitt;
- Figur 2: einen erfindungsgemäßen Zurrpunkt im Querschnitt;
- Figur 3: einen erfindungsgemäßen Zurrpunkt in der Ansicht von unten;
- Figur 4: einen erfindungsgemäßen Zurrpunkt im verschweißten Zustand und
- Figur 5: einen erfindungsgemäßen Zurrpunkt in perspektivischer Darstellung.

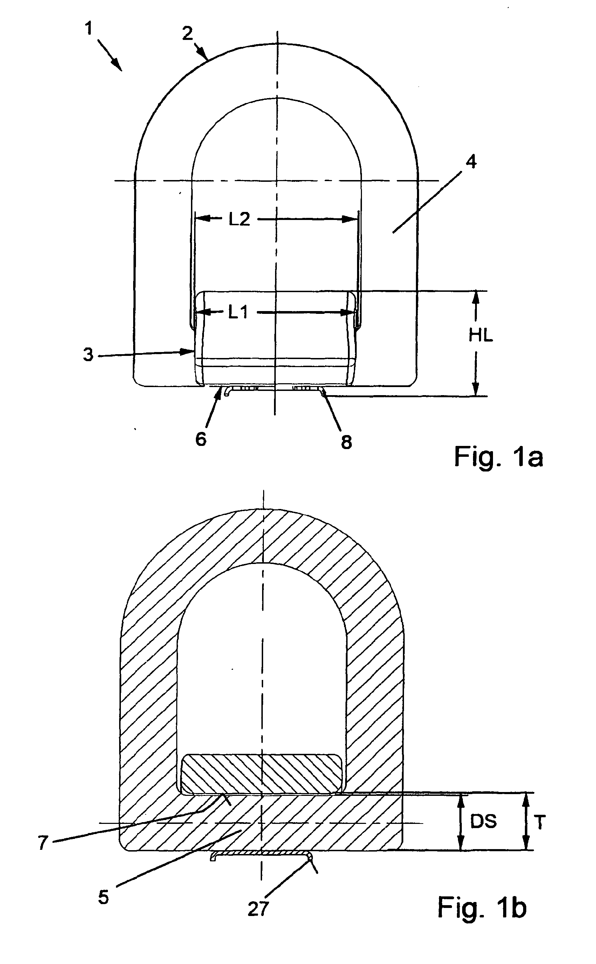

Die Figuren 1a und 1b zeigen einen Zurrpunkt 1 umfassend einen Bügel 2 und einen Lagerbock 3 in Frontalansicht. Der Bügel 2 ist D-förmig mit parallelen Schenkeln 4 ausgestaltet. Die Schenkel 4 des Bügels 2 werden endseitig über einen Steg 5 mit kreisförmigem Querschnitt verbunden. Dieser Steg 5 bildet gleichzeitig die Schwenkachse S, um welche der Bügel 2 in montierter Position um etwa 180° verschwenkbar ist. An der Unterseite 6 des Lagerbocks 3 ist eine U-förmige Nut 7 zur Aufnahme des Stegs 5 angeordnet. Die Nut 7 erstreckt sich über die gesamte Länge L1 des Lagerbocks 3. An der Unterseite 6 ist ein Halteelement 8 angeordnet, welches die Nut 7 bereichsweise abdeckt. Die Länge L1 des Lagerbocks 3 entspricht hierbei etwa der Länge L2 des Stegs 5.

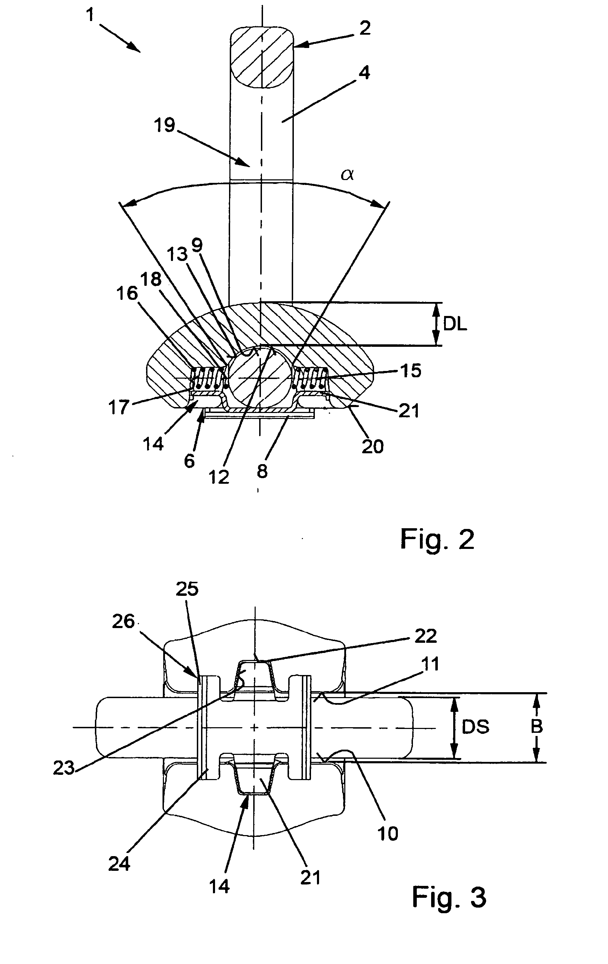

Der Querschnitt durch die Seitenansicht des Zurrpunktes 1 in Figur 2 zeigt die Anordnung des Stegs 5 in der Nut 7. In Längsrichtung entlang der Mitte der Nut 7 weist diese eine geschlossene Anlagefläche 9 für den Steg 5 auf. Diese Anlagefläche 9 gehört zur Innenfläche der Nut 7, bestehend aus Innenseiten 10, 11 und einem Nutgrund 12 (Figuren 2 und 3). Die Anlagefläche 9 erstreckt sich über die gesamte Länge L1 der Nut 7 und über einen Winkel α von rund 140°. Durch die geschlossene Anlagefläche 9 wird in diesem Bereich bei Belastung des Bügels 2 eine gleichmäßige Flächenpressung zwischen der Anlagefläche 9 und der Umfangsseite 13 des Stegs 5 erzielt. Die Nut 7 weist hierbei eine Breite B auf, welche als Spielpassung einem Durchmesser DS des Stegs 5 entspricht. Die Tiefe T der Nut 7 ist so gewählt, dass sie den Steg 5 vollständig aufnehmen kann.

In der Mitte des Lagerbocks 3 sind bei dieser Ausführung zwei in die Nut 7 mündende Taschen 14 vorgesehen. Diese Taschen 14 sind quer zur Längsachse der Nut 7 und einander gegenüberliegend angeordnet. In den Taschen 14 sind Federelemente 15 in Form von Druckfedern angeordnet. Diese stützen sich mit einem Ende 16 gegenüber einer Endseite 17 der Tasche 14 ab und drücken mit dem anderen Ende 18 gegen die Umfangsseite 13 des Stegs 5. Dadurch sind der Steg 5 und gleichsam der Bügel 2 in jeder verschwenkten Position haltbar. Gleichzeitig kann eine Dicke DL des Lagerbocks 3 oberhalb der Nut 7 so gering wie möglich gehalten werden. Da dadurch der Lagerbock 3 weniger gegenüber einer Befestigungsfläche, beispielsweise einer Transport- oder Ladefläche, hervorsteht, ist er besser vor Beschädigungen geschützt, da die Oberkante des Lagerbocks 3 hierbei den kritischsten Punkt darstellt. Insgesamt wird somit auch die gesamte Höhe HL des Lagerbocks 3 minimiert und Aussparungen auf Befestigungsflächen zur Aufnahme der Zurrpunkte 1 können flacher ausgestaltet werden.

Die Verbindungsflächen 20, über welche der Lagerbock 3 mit einer Befestigungsfläche stoffschlüssig verbunden werden kann, sind gegenüber der Unterseite 6 des Lagerbocks 3 abgewinkelt.

Die Taschen 14 zur Aufnahme der Federelemente 15 sind dabei in dieser Ausführungsform als sich von der Unterseite 6 in den Lagerbock 3 erstreckende U-förmige Vertiefungen ausgestaltet.

Über das auf der Unterseite 6 des Lagerbocks 3 angeordnete Halteelement 8 werden die Federelemente 15 und der Steg 5 in ihrer Position zusätzlich fixiert.

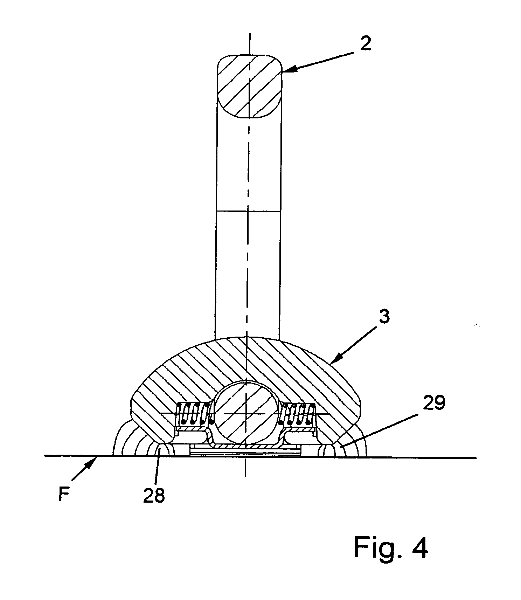

Dieses Halteelement 8 weist, wie in Figur 3 dargestellt, an seiner zum Lagerbock 3 weisenden Seitenfläche ein Blattfederelement 21 auf. Dieses Blattfederelement 21 greift in die Taschen 14 ein. In dieser Ausführung ist eine Kontur 22 der Blattfederelemente 21 an eine Kontur der Innenseiten 23 und Endseite 17 der Taschen 14 angepasst, so dass das Halteelement 8 mit seiner Kontur 22 an den Innenseiten 23 und den Endseiten 17 der Taschen 14 anliegt. Durch Einklipsen der Blattfederelemente 21 in die Taschen 14 wird das Halteelement 8 an der Unterseite 6 des Lagerbocks 3 verspannt. Das Halteelement 8 weist an seinen längsseitigen Enden Stege 24 auf, welche sich quer über die Nut 7 erstrecken und mit ihren Endabschnitten 25 auf der Unterseite 6 aufliegen. Die zu den Schenkeln 4 weisenden Kanten 26 der Stege 24 sind vom Lagerbock 3 weg weisend abgekantet. Dabei dienen Stirnseiten 27 der abgekanteten Stege 24 als Auflagefläche für den Lagerbock 3. Dadurch liegt der Lagerbock 3 nicht direkt mit seiner Unterseite 6 auf einer Befestigungsfläche F auf, so dass eine Wurzelnaht 28 problemlos entlang des Lagerbocks 3 gelegt werden kann (Figur 4). Dabei dient die Wurzelnaht 28 als Grundlage für eine Kehlnaht 29 zwischen den Verbindungsflächen 20 und der Befestigungsfläche F.

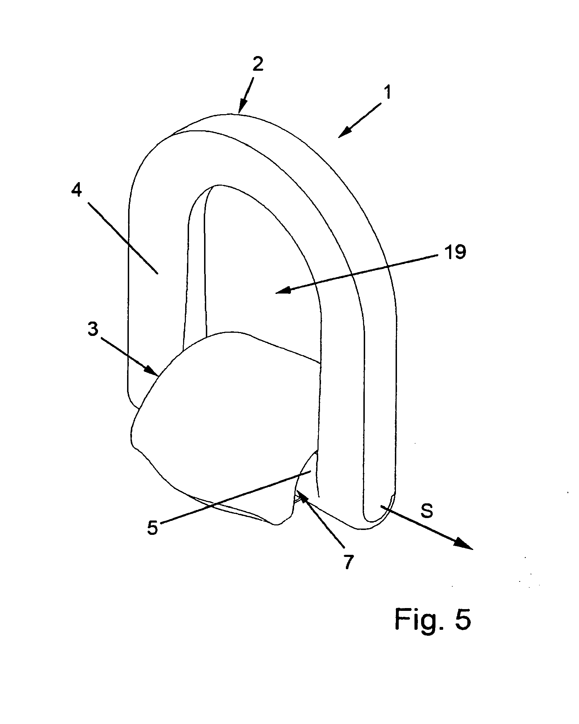

Figur 5 zeigt das Zurrelement 1 mit dem Bügel 2 und dem Lagerbock 3 in einer perspektivischen Darstellung. Der Bügel 2 weist Schenkel 4 auf, welche an ihren Enden über einen Steg 5 miteinander verbunden sind. Der Steg 5 ist dabei in einer Nut 7 des Lagerbocks 3 angeordnet.

### Bezugszeichen:

- 1 -: Zurrpunkt
- 2 -: Bügel
- 3 -: Lagerbock
- 4 -: Schenkel
- 5 -: Steg
- 6 -: Unterseite
- 7 -: Nut
- 8 -: Halteelement
- 9 -: Anlagefläche
- 10-: Innenseite
- 11 -: Innenseite
- 12 -: Nutgrund
- 13 -: Umfangsseite
- 14 -: Taschen
- 15 -: Federelement
- 16 -: Ende
- 17 -: Ende
- 18 -: Ende
- 19 -: Freiraum
- 20 -: Verbindungsfläche
- 21 -: Blattfederelement
- 22 -: Kontur
- 23 -: Innenseite
- 24 -: Steg
- 25 -: Endabschnitt
- 26 -: Kante
- 27 -: Stirnseite
- 28 -: Wurzelnaht
- 29 -: Kehlnaht
- B -: Breite
- DL -: Dicke
- DS -: Durchmesser
- HL -: Höhe
- F -: Befestigungsfläche
- L1 -: Länge
- L2 -: Länge
- S -: Schwenkachse
- T -: Tiefe
- α -: Winkel

## Patentansprüche

1. Zurrpunkt mit einem in einem Lagerbock (3) schwenkbar gelagerten Bügel (2), wobei der Bügel (2) Schenkel (4) besitzt, die über einen Steg (5) miteinander verbunden sind, wobei der Steg (5) in eine U-förmige Nut (7) des Lagerbocks (3) eingreift und wobei wenigstens ein Federelement (15) in einer Tasche (14) angeordnet ist, welche in eine Innenseite (10, 11) der Nut (7) mündet, wobei eine sich in der Mitte der Nut (7) über die gesamte Länge (L1) der Nut (7) und einen Winkel von wenigstens 60° erstreckende Innenfläche der Nut (7) als eine geschlossene Anlagefläche (9) für den Steg (5) ausgebildet ist, **dadurch gekennzeichnet, dass** die Taschen (14) als sich von der Unterseite (6) in den Lagerbock (3) erstreckende U-förmige Vertiefungen ausgestaltet sind.

2. Zurrpunkt nach Anspruch 1, **dadurch gekennzeichnet, dass** sich die Anlagefläche (9) über einen Winkel von mehr als 100° erstreckt.

3. Zurrpunkt nach Anspruch 1 oder 2, **dadurch gekennzeichnet, dass** zwei Taschen (14) einander gegenüberliegend in die Innenseiten (10, 11) der Nut (7) münden.

4. Zurrpunkt nach einem der Ansprüche 1 bis 3, **dadurch gekennzeichnet, dass** das Federelement (15) eine Druckfeder ist.

5. Zurrpunkt nach Anspruch 4, **dadurch gekennzeichnet, dass** die Druckfeder gegen eine Umfangsseite (13) des Stegs (5) drückend in der Tasche (14) angeordnet ist.

6. Zurrpunkt nach einem der Ansprüche 1 bis 5, **dadurch gekennzeichnet, dass** die Nut (7) eine Tiefe (T) aufweist, welche einem Durchmesser (DS) des Stegs (5) entspricht.

7. Zurrpunkt nach einem der Ansprüche 1 bis 6, **dadurch gekennzeichnet, dass** die Nut (7) eine Breite (B) aufweist, welche mindestens dem Durchmesser (DS) des Stegs (5) entspricht.

8. Zurrpunkt nach einem der Ansprüche 1 bis 7, **dadurch gekennzeichnet, dass** an den Unterseiten (6) Verbindungsflächen (20) für eine stoffschlüssige Verbindung von Lagerbock (3) und Befestigungsfläche (F) vorgesehen sind.

9. Zurrpunkt nach einem der Ansprüche 1 bis 8, **dadurch gekennzeichnet, dass** die Nut (7) und die Taschen (14) zumindest teilweise mittels eines Halteelements (8) abgedeckt sind.

10. Zurrpunkt nach Anspruch 9, **dadurch gekennzeichnet, dass** das Halteelement (8) an seiner zum Lagerbock (3) weisenden Seite ein Blattfederelement (21) aufweist.

11. Zurrpunkt nach Anspruch 9 oder 10, **dadurch gekennzeichnet, dass** das Blattfederelement (21) den Steg (5) teilweise umgreift.

12. Zurrpunkt nach einem der Ansprüche 9 bis 11, **dadurch gekennzeichnet, dass** das Blattfederelement (21) in die Taschen (14) eingreift.

13. Zurrpunkt nach einem der Ansprüche 9 bis 12, **dadurch gekennzeichnet, dass** eine Kontur (22) des Blattfederelements (21) an eine Kontur von Innenseiten (23) und Endseite (17) der Tasche (14) angepasst ist.

14. Zurrpunkt nach einem der Ansprüche 9 bis 13, **dadurch gekennzeichnet, dass** das Halteelement (8) in Querrichtung der Nut (7) verlaufende Stege (24) aufweist, deren Endabschnitte (25) bereichsweise über die Nut (7) hinausragen und zumindest teilweise an der Unterseite (6) anliegen.

15. Zurrpunkt nach einem der Ansprüche 10 bis 14, **dadurch gekennzeichnet, dass** zu den Schenkeln (4) weisende Kanten (26) des Halteelements (8) von der Unterseite (6) weg weisend abgekantet sind.

16. Zurrpunkt nach Anspruch 15, **dadurch gekennzeichnet, dass** Stirnseiten (27) der Kanten (26) als Auflagefläche für den Lagerbock (3) ausgestaltet sind.

## Claims

1. Lashing point with a shackle (2) pivotably supported in a bearing block (3), wherein the shackle (2) has legs (4) that are interconnected by means of a web (5), wherein the web (5) engages a U-shaped groove (7) of the bearing block (3) and wherein at least one spring element (15) is arranged in a pocket (14), said pocket leading into an inside (10, 11) of the groove (7), wherein an inner surface of the groove (7), which extends in the middle of the groove (7) over the entire length (L1) of the groove (7) and an angle of at least 60°, is formed as a closed contact surface (9) for the web (5), **characterised in that** the pockets (14) are designed as U-shaped indentations extending from the underside (6) into the bearing block (3).

2. Lashing point according to claim 1, **characterised in that** the contact surface (9) extends over an angle of more than 100°.

3. Lashing point according to claim 1 or 2, **characterised in that** two pockets (14) opposite one another lead into the insides (10, 11) of the groove (7).

4. Lashing point according to one of the claims 1 to 3, **characterised in that** the spring element (15) is a compression spring.

5. Lashing point according to claim 4, **characterised in that** the compression spring is arranged in the pocket (14), pressing against a peripheral side (13) of the web (5).

6. Lashing point according to one of the claims 1 to 5, **characterised in that** the groove (7) has a depth (T) which corresponds to a diameter (DS) of the web (5).

7. Lashing point according to one of the claims 1 to 6, **characterised in that** the groove (7) has a width (B) which at least corresponds to the diameter (DS) of the web (5).

8. Lashing point according to one of the claims 1 to 7, **characterised in that** connecting surfaces (20) for a positive material joint of bearing block (3) and mounting surface (F) are provided at the undersides (6).

9. Lashing point according to one of the claims 1 to 8, **characterised in that** the groove (7) and the pockets (14) are at least partly covered by means of a retaining element (8).

10. Lashing point according to claim 9, **characterised in that** the retaining element (8) has a leaf spring element (21) on its side pointing to the bearing block (3).

11. Lashing point according to claim 9 or 10, **characterised in that** the leaf spring element (21) partly reaches around the web (5).

12. Lashing point according to one of the claims 9 to 11, **characterised in that** the leaf spring element (21) engages the pockets (14).

13. Lashing point according to one of the claims 9 to 12, **characterised in that** a contour (22) of the leaf spring element (21) is adapted to a contour of insides (23) and end side (17) of the pocket (14).

14. Lashing point according to one of the claims 9 to 13, **characterised in that** the retaining element (8) has webs (24) running in the transverse direction of the groove (7), the end sections (25) of said webs zonally protruding beyond the groove (7) and at least partly contacting the underside (6).

15. Lashing point according to one of the claims 10 to 14, **characterised in that** edges (26), which point to the legs (4), of the retaining element (8) are bent pointing away from the underside (6).

16. Lashing point according to claim 15, **characterised in that** faces (27) of the edges (26) are designed as a bearing surface for the bearing block (3).

## Revendications

1. Point d'amarrage comprenant un arceau (2) monté en pivotement dans un bloc-palier (3), l'arceau (2) possédant des branches (4) qui sont reliées l'une à l'autre via une traverse (5), ladite traverse (5) étant engagée dans une gorge en forme de U (7) du bloc-palier (3), et au moins un élément à ressort (15) étant agencé dans une poche (14) qui débouche dans une face intérieure (10, 11) de la gorge (7), de sorte qu'il se forme, à titre de surface d'appui fermée (9) pour la traverse (5), une surface intérieure de la gorge (7) qui s'étend au milieu de la gorge (7) sur la totalité de la longueur (L1) de la gorge (7) et sur un angle d'au moins 60°,
**caractérisé en ce que** les poches (14) sont dotées de renfoncements en forme de U qui s'étendent depuis la face inférieure (6) dans le bloc-palier (3).

2. Point d'amarrage selon la revendication 1, **caractérisé en ce que** la surface d'appui (9) s'étend sur un angle de plus de 100°.

3. Point d'amarrage selon la revendication 1 ou 2, **caractérisé en ce que** deux poches (14) mutuellement opposées débouchent dans les faces intérieures (10, 11) de la gorge (7).

4. Point d'amarrage selon l'une des revendications 1 à 3, **caractérisé en ce que** l'élément à ressort (15) est un ressort de compression.

5. Point d'amarrage selon la revendication 4, **caractérisé en ce que** le ressort de compression est agencé dans la poche (14) de manière à pousser contre un côté périphérique (13) de la traverse (5).

6. Point d'amarrage selon l'une des revendications 1 à 5, **caractérisé en ce que** la gorge (7) présente une profondeur (T) qui correspond à un diamètre (DS) de la traverse (5).

7. Point d'amarrage selon l'une des revendications 1 à 6, **caractérisé en ce que** la gorge (7) présente une largeur (B) qui correspond au moins au diamètre (DS) de la traverse (5).

8. Point d'amarrage selon l'une des revendications 1 à 7, **caractérisé en ce qu'**il est prévu sur les faces inférieures (6) des surfaces de liaison (20) pour une liaison à coopération de matières du bloc-palier (3) et de la surface de fixation (F).

9. Point d'amarrage selon l'une des revendications 1 à 8, **caractérisé en ce que** la gorge (7) et les poches (14) sont recouvertes au moins partiellement au moyen d'un élément de maintien (8).

10. Point d'amarrage selon la revendication 9, **caractérisé en ce que** l'élément de maintien (8) comprend un élément de ressort à lame (21) sur son côté tourné vers le bloc-palier (3).

11. Point d'amarrage selon la revendication 9 ou 10, **caractérisé en ce que** l'élément de ressort à lame (21) entoure partiellement la traverse (5).

12. Point d'amarrage selon l'une des revendications 9 à 11, **caractérisé en ce que** l'élément de ressort à lame (21) s'engage dans les poches (14).

13. Point d'amarrage selon l'une des revendications 9 à 12, **caractérisé en ce qu'**un contour (22) de l'élément de ressort à lame (21) est adapté à un contour des côtés intérieurs (23) et du côté d'extrémité (17) de la poche (14).

14. Point d'amarrage selon l'une des revendications 9 à 13, **caractérisé en ce que** l'élément de maintien (8) comprend des barrettes (24) s'étendant en direction transversale de la gorge (7), dont les tronçons d'extrémité (25) dépassent localement au-dessus de la gorge (7) et reposent au moins partiellement contre la face inférieure (6).

15. Point d'amarrage selon l'une des revendications 10 à 14, **caractérisé en ce que** les arêtes (26) de l'élément de maintien (8) tournées vers les branches (4) sont biseautés du côté détourné de la face inférieure (6).

16. Point d'amarrage selon la revendication 15, **caractérisé en ce que** les faces frontales (27) des arêtes (26) sont conçues à titre de surface d'appui pour le bloc-palier (3).
